# EUROPÄISCHE PATENTSCHRIFT

(11) **EP 1 080 314 B1**
(45) Veröffentlichungstag und Bekanntmachung des Hinweises auf die Patenterteilung: **19.07.2006**
(21) Anmeldenummer: 00920380.3
(22) Anmeldetag: 11.03.2000
(51) Int. Cl.: F16D 1/06

(54) **KUPPLUNG UND KRAFTSTOFFFÖRDERPUMPE MIT KUPPLUNG**
COUPLING AND FUEL DELIVERY PUMP WITH A COUPLING
COUPLAGE ET POMPE D'ALIMENTATION EN CARBURANT AVEC COUPLAGE

(30) Priorität: 29.03.1999 DE 19914269
(43) Veröffentlichungstag der Anmeldung: 07.03.2001
(73) Patentinhaber: ROBERT BOSCH GMBH, 70442 Stuttgart (DE)
(72) Erfinder: LETTNER, Thomas, A-5421 Adnet (AT); FEES, Heiner, D-74321 Bietigheim-Bissingen (DE)
(86) Internationale Anmeldenummer: PCT/DE2000/000773
(87) Internationale Veröffentlichungsnummer: WO 2000/058640

(56) Entgegenhaltungen:
- EP-A- 0 481 410
- WO-A-96/05101
- DE-A- 19 625 488
- GB-A- 2 071 270
- US-A- 5 738 448

## Beschreibung

### Stand der Technik

Die Erfindung betrifft eine Kupplung nach dem Oberbegriff des Anspruchs 1.

Die Kopplung von zwei drehbaren Körpern kann z.B. durch eine Kreuzschlitzkupplung erfolgen, die auch als Kreuzscheiben- oder Oldhamkupplung bezeichnet wird. Kupplungen nach dem Kreuzschlitzprinzip dienen zur Übertragung von Bewegungen. Sie werden vorwiegend zur Antriebskopplung bei nicht fluchtenden Achsen eingesetzt.

Das Kreuzschlitzprinzip basiert auf zwei Kupplungshälften (Antrieb und Abtrieb) und einer Zwischenscheibe als Kupplungsteil. An den beiden Kupplungshälften sind Führungsleisten oder Führungsnuten ausgebildet, die senkrecht zueinander angeordnet sind. An der Zwischenscheibe sind komplementäre Führungsnuten oder Führungsleisten ausgebildet. Die Übertragung der Drehbewegung erfolgt winkeltreu, wobei die Zwischenscheibe auf den Führungen der Kupplungshälften gleitet.

Das bekannte Kreuzschlitzprinzip beruht auf einer Reihenschaltung von einem Antriebselement, einer Zwischenscheibe und einem Abtriebselement. Die Übertragung eines Drehmoments erfolgt in zwei Ebenen. Daraus ergibt sich eine relativ große Bauhöhe. Außerdem hat sich die Kippneigung der Zwischenscheibe als nachteilig erwiesen. Das Auftreten einer großen Flächenpressung in den Führungen führt bei hohen Drehzahlen zu einer starken Reibungswärmeentwicklung und einem hohen Verschleiß.

Aus der EP 0 481 410 A2 ist eine Kupplung bekannt bei der ein Kupplungsteil, das einen radialen Vorsprung aufweist auf ein Wellenende eines Motors aufgeschoben wird. Dieser radiale Vorsprung wird mit einer Aussparung in einem angetriebenen Bauteil zusammen, so dass ein Drehmoment von dem Motor auf das angetriebene Bauteil übertragen werden kann. Nachteilig an dieser Lösung ist, dass ein Achsversatz und/oder ein Fluchtungsfehler bei dieser Kupplung nicht oder nur ein sehr geringem Umfang ausgeglichen werden kann, da das Kupplungsteil spielfrei in dem angetriebenen Bauteil gelagert ist.

Bei einer aus der DE 196 25 488 A1 bekannten Kupplung, wird das Drehmoment von einer eine Welle umgebenden Nabe auf die Nabe mit Hilfe eines zwischen Welle und Nabe eingeklemmten Gummirings kraftschlüssig übertragen.

Aufgabe der Erfindung ist es, die bekannten Kupplungen und eine Kraftstoffförderpumpe mit einer derartigen Kupplung mit einer kleinen Bauhöhe vor allem in Bezug auf das übertragbare Drehmoment und die Lebensdauer weiterzuentwickeln.. Die erfindungsgemäße Kupplung und die erfindungsgemäße Kraftstoffförderpumpe sollen kostengünstig herstellbar und einfach zu montieren sein.

Die Aufgabe ist bei einer Kupplung nach dem Oberbegriff des Anspruchs 1, durch die kennzeichnende Merkmale des Anspruchs 1 gelöst. Dadurch können Verbindungswellen und Verliersicherungen entfallen, die bei herkömmlichen Kreuzschlitz-Kupplungen erforderlich sind. Das führt zu einer Reduzierung der Anzahl der benötigten Teile Außerdem ist mit Hilfe des integrierten Kupplungsteiles eine Vorzentrierung der drehbaren Körper möglich. Das Kupplungsteil kann ein- oder auch mehrteilig ausgebildet sein.

Dadurch, dass das Kupplungsteil die Form einer Scheibe hat, in der ein zentrales Langloch mit annähernd ebenen oder leicht balligen Seitenflächen ausgespart ist, das zur Aufnahme des einen drehbaren Körpers, insbesondere einer Antriebswelle, dient, und an der vier spitz zulaufende Nasen ausgebildet sind, wobei in dem anderen drehbaren Körper, insbesondere einem Zahnrad, eine zentrale Aussparung vorgesehen ist, deren Kontur komplementär zu der Kontur der Scheibe ausgebildet ist, wird die der Erfindung zu Grunde liegende Aufgabe gelöst. Üblicherweise ist die Kupplung außerhalb des Funktionsraumes angeordnet. Durch die erfindungsgemäße Ausgestaltung der Kupplung ist es möglich, die Kupplung innerhalb des Funktionsraumes anzuordnen. Bei dem Funktionsraum kann es sich z.B. um das Gehäuse einer Kraftstoffförderpumpe handeln.

Eine besondere Ausführungsart der Erfindung ist dadurch gekennzeichnet, dass das Kupplungsteil in sich asymmetrisch ausgebildet ist. Das liefert den Vorteil, dass ein falscher Einbau des Kupplungsteils verhindert wird. Dadurch wird die Montage vereinfacht.

Eine weitere besondere Ausführungsart der Erfindung ist dadurch gekennzeichnet, dass die Kontaktflächen zwischen dem Kupplungsteil und den drehbaren Körpern ballig ausgebildet sind. Dadurch werden die im Betrieb auftretende Flächenpressung reduziert und die Schmiereigenschaften verbessert. Die auftretende Reibung und demzufolge der Verschleiß werden minimiert.

Bei einer Kraftstoffförderpumpe mit zwei in einer Pumpkammer miteinander in Eingriff befindlichen drehbaren Zahnrädern, die Kraftstoff aus einem mit einem Vorratsraum verbundenen Ansaugraum entlang einem zwischen den Stirnflächen der Zahnräder und der Umfangswand der Pumpkammer gebildeten Förderkanal in einen Druckraum fördern, wobei eines der Zahnräder durch eine Antriebswelle angetrieben ist, ist die vorab geschilderte Aufgabe dadurch gelöst, dass die Antriebswelle durch eine vorab beschriebene Kupplung mit dem angetriebenen Zahnrad gekoppelt ist. Eine derartige Kraftstoffförderpumpe ist bspw. aus der DE 196 25 488 bekannt. Der Antrieb der Kraftstoffförderpumpe erfolgt bspw. über die Nockenwelle einer Brennkraftmaschine. Die Kraftstoffförderpumpe kann auch mit einer Hochdruckpumpe gekoppelt sein. Die erfindungsgemäße Kraftstoffförderpumpe liefert die folgenden Vorteile: Kopplung des Zahnrads mit der Antriebswelle in nur einer Ebene, weniger Schnittstellen, eine geringere Kippneigung, geringere Kippmomente, geringere Reibung, geringere Bauhöhe, weniger Teile, optimierter Werkstoffeinsatz, Gewichtsreduzierung, Integration des Kupplungsteils in das angetriebene Zahnrad, keine zusätzliche Aufnahme oder Führung für das Kupplungsteil notwendig, integrierte Schmierung, integrierte Kühlung, kostengünstige und rationelle Herstellung in Sinter- oder Kunststoffspritzgusstechnik oder Stanztechnik, Vorzentrierung bei der Montage möglich, verbesserte Dämpfung, keine Fehlmontage des Kupplungsteils durch asymmetrische Geometrie, Links- und Rechtslauf bei gleichem Übertragungsverhalten, Links- und Rechtslauf bei unterschiedlichem Übertragungsverhalten möglich, reduzierte Flächenpressung durch konvexe bzw. konkave Anlagegeometrie und Verliersicherung entfällt durch Baugruppenintegration.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

In der Zeichnung zeigt:
- Figur 1: eine Explosionsdarstellung einer erfindungsgemäßen Kupplung;
- Figur 2: die Kupplung aus Figur 1 im zusammengebauten Zustand;
- Figur 3: eine Schnittdarstellung der in den Figuren 1 und 2 dargestellten Kupplung;
- Figur 4: die Darstellung eines Schnitts entlang der Linie IV-IV in Figur 3;
- Figur 5: eine vergrößerte Darstellung der Einzelheit x aus Figur 3;
- Figur 6: eine Schnittdarstellung einer ersten Ausführungsform einer erfindungsgemäßen Kraftstoffförderpumpe;
- Figur 7: einen Ausschnitt aus Figur 6 in der Seitenansicht;
- Figur 8: eine Schnittdarstellung einer zweiten Ausführungsform einer erfindungsgemäßen Kraftstoffförderpumpe;
- Figur 9: einen Ausschnitt aus Figur 8; und
- Figur 10: einen weiteren Ausschnitt aus Figur 8.

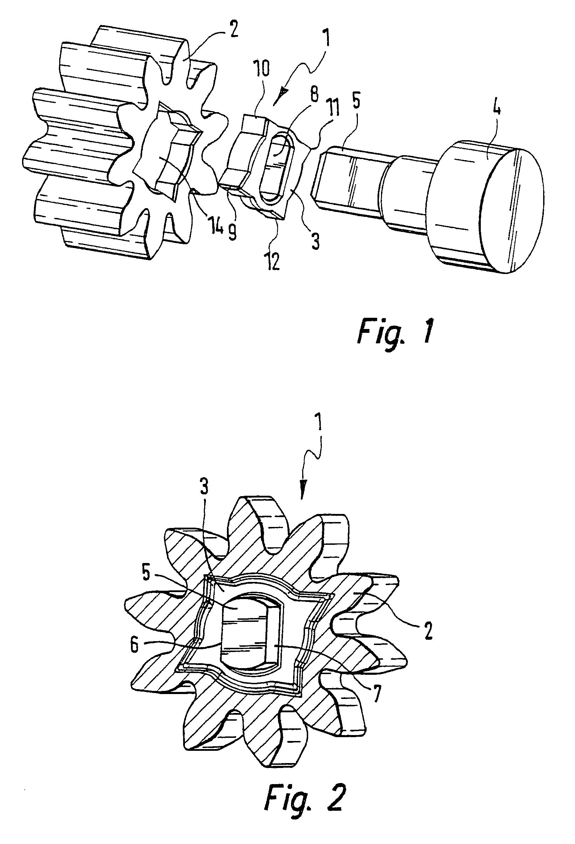

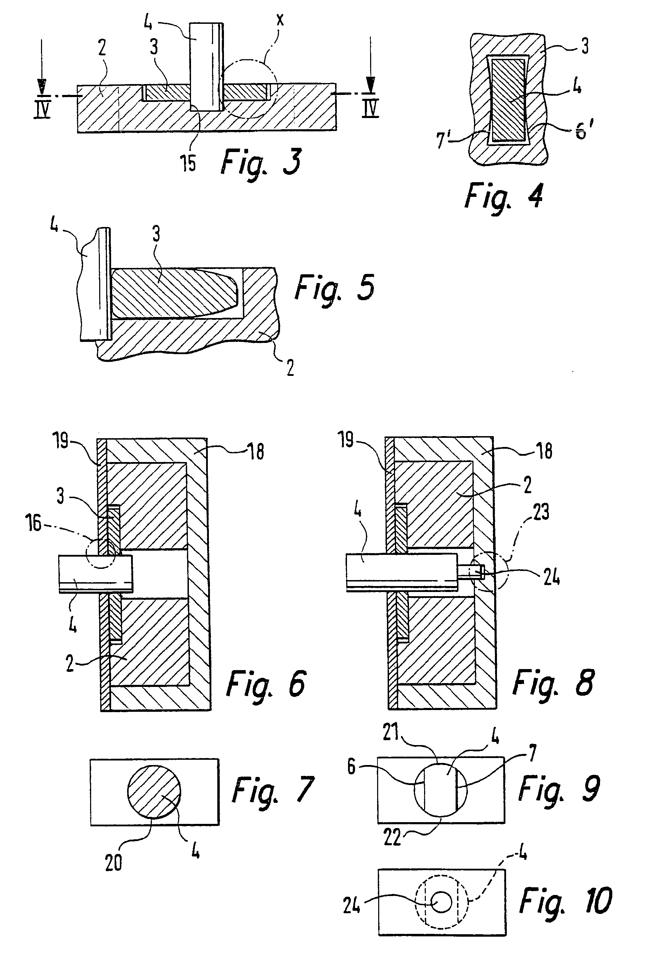

In Figur 1 ist eine Ausführungsform einer erfindungsgemäßen Kupplung insgesamt mit 1 bezeichnet. Ein Zahnrad 2 ist mit Hilfe eines Kupplungsteils 3 mit einer Antriebswelle 4 gekoppelt. An dem Ende 5 der Antriebswelle 4 sind, wie in Figur 2 zu sehen ist, zwei Abflachungen 6 und 7 ausgebildet. Das Ende 5 der Antriebswelle 4 ist in einem Langloch 8 mit zwei annähernd ebenen oder leicht balligen Seitenflächen 6' und 7' (Figur 4) aufgenommen, das in dem Kupplungsteil 3 ausgespart ist.

Das Kupplungsteil 3 hat im Wesentlichen die Form einer quaderförmigen Scheibe, an der sternförmig vier spitz zulaufende Nasen 9, 10, 11 und 12 ausgebildet sind. Die Flächen zwischen den Nasen 9 bis 12 sind jeweils leicht nach außen gewölbt.

In dem Zahnrad 2 ist eine Aussparung 14 vorgesehen, deren Geometrie komplementär zu dem Kupplungsteil 3 ausgebildet ist. Im Zentrum der Aussparung 14 kann ein Durchgangsloch zur Aufnahme des Endes 5 der Antriebswelle 4 ausgespart sein. Zwischen dem Kupplungsteil 3 und der Aussparung 14 in dem Zahnrad 2 ist ausreichend Spiel vorhanden, um eine einfache Montage der Kupplung 1 zu gewährleisten. Durch die spezielle Geometrie des Kupplungsteils 3 und der Aussparung 14 in dem Zahnrad 2 wird eine sichere Drehmomentübertragung gewährleistet. Gleichzeitig können Achsversätze ausgeglichen werden.

In der in Figur 3 dargestellten Schnittsansicht sieht man, dass in dem Zahnrad 2 kein Durchgangsloch, sondern ein Sackloch 15 zur Aufnahme des Endes der Antriebswelle 4 vorgesehen ist.

In der in Figur 4 dargestellten Schnittansicht ist zu sehen, dass die Kontaktflächen zwischen dem Kupplungsteil 3 und der Antriebswelle 4 ballig ausgebildet sind. Dadurch werden die im Betrieb auftretenden Kräfte gleichmäßig verteilt.

In der in Figur 5 dargestellten Schnittansicht der Einzelheit x aus Figur 3 wird deutlich, dass nicht nur die Kontaktfläche zwischen dem Kupplungsteil 3 und der Antriebswelle 4, sondern auch die Kontaktfläche zwischen dem Kupplungsteil 3 und dem Zahnrad 2 ballig ausgebildet ist. Dadurch wird neben dem Vorteil der geringeren Flächenpressung der Zutritt für Schmiermittel erleichtert.

In Figur 6 befindet sich das Zahnrad 2 in einem Gehäuse 18 einer erfindungsgemäßen Kraftstoffförderpumpe. Der Aufbau und die Funktionsweise der Kraftstoffförderpumpe gehen aus der DE 196 25 488 hervor. Das Gehäuse 18 ist durch einen Deckel 19 abgeschlossen, in dem eine Bohrung für die Antriebswelle 4 vorgesehen ist. Durch einen Kreis 16 ist angedeutet, wo die Antriebswelle 4 relativ zu dem Deckel 19 zentriert wird. In Figur 7 sieht man, dass der gesamte Umfang 20 der Antriebswelle 4 zur Zentrierung dient.

In den Figuren 8 und 9 ist schematisch dargestellt, dass bei einer Ausführung des Endes der Antriebswelle mit Abflachungen 6 und 7 die Restflächen 21 und 22 zu Zentrierzwecken dienen.

Aus den Figuren 8 und 10 geht hervor, dass zur Zentrierung der Antriebswelle 4, wie durch den Kreis 22 in Figur 8 angedeutet ist, auch ein Wellenstummel 24 verwendet werden kann, der an dem Ende der Antriebswelle 4 ausgebildet ist. In Figur 10 sind durch gestrichelte Linien die Konturen der Antriebswelle 4 angedeutet.

Üblicherweise ist die Kupplung außerhalb des Gehäuses der Kraftstoffförderpumpe angeordnet. Bei dieser Anordnung ist eine zusätzliche Verbindungswelle nötig. Daraus ergeben sich zusätzliche Schnittstellen zwischen der Kupplung und der Verbindungswelle sowie zwischen der Verbindungswelle und dem angetriebenen Zahnrad. Für die Kupplung wird außerdem eine Verliersicherung benötigt.

Durch die erfindungsgemäße Lösung ist eine komplette Integration des gesamten Kupplungssystems in das Gehäuse der Kraftstoffförderpumpe möglich. Das in dem Gehäuse der Kraftstoffförderpumpe enthaltene Fördermedium dient zur Schmierung und zur Kühlung der erfindungsgemäßen Kupplung.

## Patentansprüche

1. Kupplung zur Kopplung von zwei drehbaren Körpern (2, 4), insbesondere von einem Zahnrad und einer Antriebswelle, die mit oder ohne Achsversatz im Wesentlichen konzentrisch zueinander angeordnet sind, mit einem Kupplungsteil (3), wobei das Kupplungsteil (3) in einen der drehbaren Körper (2, 4) integriert ist, **dadurch gekennzeichnet, dass** das Kupplungsteil (3) die Form einer Scheibe hat, in der ein zentrales Langloch (8) mit annähernd ebenen oder leicht balligen Seitenflächen ausgespart ist, das zur Aufnahme des einen drehbaren Körpers (4), insbesondere einer Antriebswelle, dient, und an der vier spitz zulaufende Nasen (9) ausgebildet sind, wobei in dem anderen drehbaren Körper (2) insbesondere einem Zahnrad, eine zentrale Aussparung (14) vorgesehen ist, deren Kontur komplementär zu der Kontur der Scheibe ausgebildet ist.

2. Kupplung nach Anspruch 1, **dadurch gekennzeichnet, dass** das Kupplungsteil (3) in sich asymmetrisch ausgebildet ist.

3. Kupplung nach einem der vorhergehenden Ansprüche, **dadurch gekennzeichnet, dass** die Kontaktflächen zwischen dem Kupplungsteil (3) und den drehbaren Körpern (2, 4) ballig ausgebildet sind.

4. Kupplung nach einem der vorhergehenden Ansprüche, **dadurch gekennzeichnet, dass** das Kupplungsteil zwei oder mehr gleichgeformte Scheiben umfasst.

5. Kraftstoffförderpumpe mit zwei in einer Pumpkammer miteinander in Eingriff befindlichen drehbaren Zahnrädern, die Kraftstoff aus einem mit einem Vorratsraum verbundenen Ansaugraum entlang einem zwischen den Stirnflächen der Zahnräder und der Umfangswand der Pumpkammer gebildeten Förderkanal in einen Druckraum fördern, wobei eines der Zahnräder durch eine Antriebswelle (4) angetrieben ist, **dadurch gekennzeichnet, dass** die Antriebswelle (4) durch eine Kupplung (1) nach einem der vorhergehenden Ansprüche mit dem angetriebenen Zahnrad (2) gekoppelt ist.

## Claims

1. Coupling for the coupling of two rotatable bodies (2, 4), in particular a gearwheel and a drive shaft, which with or without any axial offset are essentially arranged concentrically with one another, having a coupling part (3), the coupling part (3) being integrated into one of the rotatable bodies (2, 4), **characterized in that** the coupling part (3) takes the form of a plate, in which a central elongated hole (8) with approximately plane or lightly rounded side faces is let, which serves to accommodate the one rotatable body (4), in particular a drive shaft, and on which four lugs (9) tapering to a point are formed, a central recess (14), the contour of which is of a complementary design shape to the contour of the plate, being provided in the other rotatable body (2), in particular a gearwheel.

2. Coupling according to Claim 1, **characterized in that** the coupling part (3) is of inherently asymmetrical shape.

3. Coupling according to any one of the preceding Claims, **characterized in that** the contact faces between the coupling part (3) and the rotatable bodies (2, 4) are of rounded shape.

4. Coupling according to any one of the preceding Claims, **characterized in that** the coupling part comprises two or more identically shaped plates.

5. Fuel delivery pump having two rotatable gearwheels intermeshing in a pump chamber, which deliver fuel from a suction chamber connected to storage chamber along a delivery duct formed between the end faces of the gearwheels and the peripheral wall of the pump chamber, one of the gearwheels being driven by a drive shaft (4), **characterized in that** the drive shaft (4) is coupled to the driven gearwheel (2) by a coupling (1) according to any one of the preceding claims.

## Revendications

1. Couplage pour deux corps rotatifs (2, 4), notamment une roue dentée et un arbre moteur disposés pour l'essentiel concentriques l'un par rapport à l'autre avec ou sans décalage axial, comprenant un élément de couplage (3) intégré dans l'un des corps rotatifs (2, 4),
**caractérisé en ce que**
l'élément de couplage (3) présente la forme d'une plaque dans laquelle est réservé un trou oblong central (8) ayant des surfaces latérales sensiblement planes ou légèrement bombées, et qui sert à loger l'un des corps rotatifs (4), en particulier un arbre moteur, et la plaque comporte quatre ergots (9) pointus, alors que l'autre corps rotatif (2), en particulier une roue dentée comporte, un évidement central (14) dont le contour est complémentaire du contour de la plaque.

2. Couplage selon la revendication 1,
**caractérisé en ce que**
l'élément de couplage (3) présente en soi une forme asymétrique.

3. Couplage selon l'une quelconque des revendications précédentes,
**caractérisé en ce que**
les surfaces de contact entre l'élément de couplage (3) et les corps rotatifs (2, 4) présentent une forme bombée.

4. Couplage selon l'une quelconque des revendications précédentes,
**caractérisé en ce que**
l'élément de couplage comprend deux ou plusieurs plaques de la même forme.

5. Pompe de refoulement de carburant avec deux roues dentées rotatives engrenées l'une dans l'autre dans une chambre de pompe, qui refoulent du carburant d'une chambre d'aspiration reliée à un réservoir, le long d'un canal de refoulement formé entre les surfaces frontales des roues dentées et la paroi périphérique de la chambre de pompe, dans une chambre de pression, l'une des roues dentées étant entraînée par un arbre moteur (4),
**caractérisée en ce que**
l'arbre moteur (4) est accouplé à la roue dentée (2) entraînée par un couplage (1) selon l'une des revendications précédentes.
